# EUROPEAN PATENT SPECIFICATION

(11) **EP 3 094 578 B1**
(45) Date of publication and mention of the grant of the patent: **31.01.2018**
(21) Application number: 14830575.8
(22) Date of filing: 15.12.2014
(51) Int. Cl.: B65G 1/14

(54) **AUTOMATIC STACKING COLUMN FOR STORING AND TRANSPORTING ELEMENTS**
AUTOMATISCHE STAPELSÄULE ZUM LAGERN UND TRANSPORTIEREN VON ELEMENTEN
COLONNE D'EMPILEMENT AUTOMATIQUE POUR STOCKER ET TRANSPORTER DES ÉLÉMENTS

(30) Priority: 17.12.2013 IT MI20132111
(43) Date of publication of application: 23.11.2016
(73) Proprietor: Towers Automotive S.r.l., 27029 Vigevano (IT)
(72) Inventor: VIOLANTE, Alberto, 27029 Vigevano (PV) (IT)
(74) Representative: Riccardi, Sergio
(86) International application number: PCT/IB2014/002887
(87) International publication number: WO 2015/092537

(56) References cited:
- WO-A1-2011/033337
- DE-A1- 3 807 663
- DE-U1-202004 007 643

## Description

The present invention relates to an automatic stacking column for storing and transporting elements handled by a robot, that may be used even if the elements are loaded manually. These columns allow to handle, store and convey safely and efficiently various elements to be assembled in assembly lines of many industrial products and more particularly in the automotive industry. These columns are also used for transporting the elements between the plants of the suppliers and the factories of the final products, as well as for handling the elements inside the plants.

The presently used conventional columns can only support the elements, while additional systems are required to clamp safely the elements in order to avoid damages and/or breaking of the elements during transport. These columns are generally designed to store and carry light sheets.

The automatic column of the present invention was designed to handle and carry heavy elements, such as glass of high commercial value, such as fixed or sliding glass roofs, ready to be assembled on the vehicles in the assembly line.

An example of an automatic stacking column for transporting and handling heavy elements according to the preamble of claim 1, is disclosed in the German utility model DE 202004007643, illustrating a column comprising click levers blocking said heavy elements immediately on loading said element, said element comprising two separate members, the one over and the other under the element, which may be rotated independently, but this disclosure does not deal at all with the problems of storage space, blocking the subsequent elements and securing the elements against jolts.

The object of the invention is to provide an automatic stacking column having a self-locking click lever for heavy elements, allowing to support and lock the elements to be handled and transported and prevent jolts during the handling movements, wherein locking of each loaded element advantageously occurs when loading the subsequent element in the column stack. This object is achieved by the automatic stacking column according to the appended claim 1. This system allows to reduce design time and eliminates additional protection devices inside the transport container, which were required to avoid breakings and/or damages of the transported elements.

Objects, advantages and features of the automatic column of the present invention will however appear clearly from the following detailed description of a preferred embodiment, to be read with reference to the accompanying illustrative drawings, in which:
Fig. 1 is a general exploded view of the system;
Fig. 1A is a top view of the assembled system;
Fig. 2 is a perspective view of the assembled system;
Fig. 2A is a side view of a portion of the column during storage of the elements;
Fig. 2B is a detailed view of the bottom portion of the column; and
Fig. 3 is a perspective view on an enlarged scale of the two lower end links of the column, with some detached members to display their function.

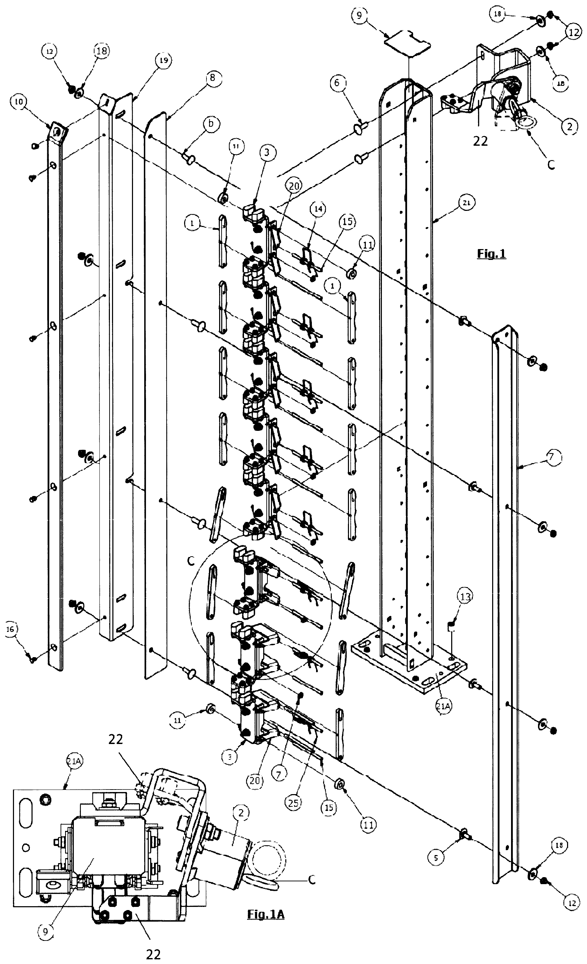

With reference now to the figures of the accompanying drawings and more particularly to Figure 1, the components of the system will be listed, together with a short explanation of the function of each component.
1 - Slot for the movement of each column link, allowing the opening motion of the subsequent loading block;
2 - General view of the manual system to clamp all the elements, preventing their movement during transport or storage, turning the key C, actuating the turning lever 22;
3 - General view of the loading block, characteristic feature of the system, holding the members designed to support and fasten the elements to be handled, comprising a C-bent channel sheet comprising an upper flange 32 and a lower flange 33.
4 - General view of the special loading block for the first lower blade of the column, provided only with an upper flange 44;
5, 6 - Bolts for fastening to the column standards;
7 - Case clamping the rotation pins of the loading blocks;
8 - Case without bends;
9 - Column cover;
10 - Chute covering;
11 - Spacer;
12 - Self-locking hexagon nut;
13 - Flat end dowel;
14 - Spring for blade motion;
15 - Pin, four being provided for each loading block, allowing rotation of the system and fixing the block at the nominal point through the relevant holes in the column;
16 - Blind rivet;
17, 18 - Washers for nuts 12 and bolts 5, 6;
19 - Column chute;
20 - Connection seat for the loading blocks;
21- Column blank comprising base 21A and shoulders 21.

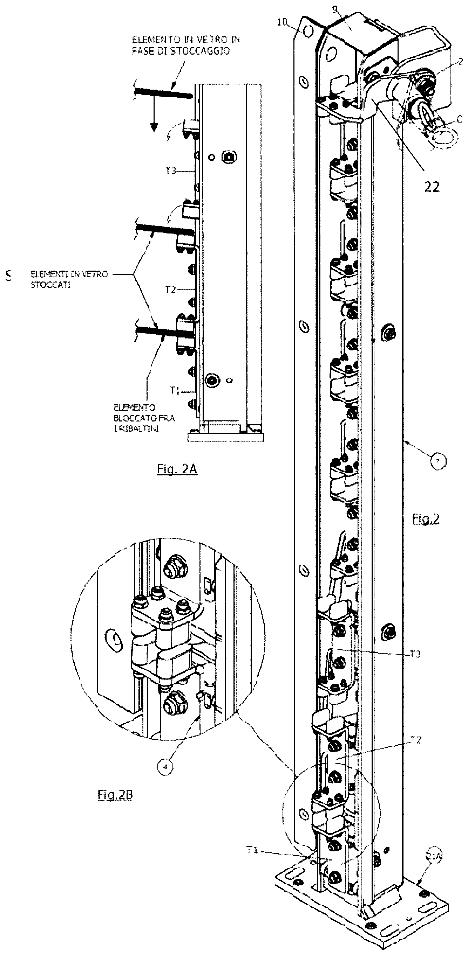

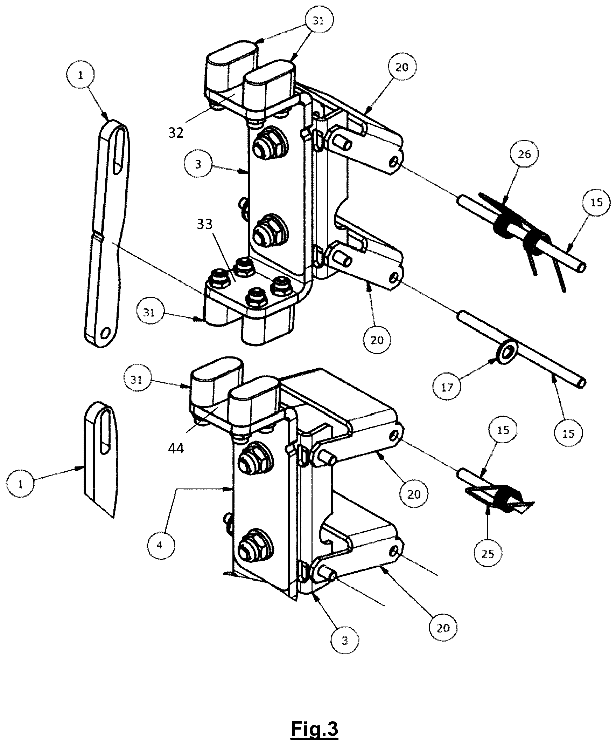

Figure 1A is a top view of the column, while Figure 2 with its details 2A and 2B shows the column operation. Loading of the first element to be handled on the special block 4 (T1) at the column bottom causes the overlying loading block (T2) to lower and protrude, with the automatic clamping of the first element between the vibration damping pads 31 (see figure 3), and loading of the second element to be handled on the same block (T2), while at the same time the third loading block (T3) starts to protrude from shoulders 21 in preparation to receive the third element to be handled, and so on, until loading of elements is completed, and then turning key C of the manual system 2, all the loaded elements are locked by the turning lever 22 of the system 2.

Figure 3 is a view on an enlarged scale of the special loading block 4 for the first (bottom) position T1 of the column, and of an overlying normal loading block 3 for the subsequent positions T2, T3.... Tn. The loading block consists of an upset-L angle iron for the special lowermost block 4 provided with an upper flange 44, and a C-bent channel sheet for the normal block 3 comprising an upper flange 32 and a lower flange 33. In this figure one can see the vibration damping pads 31, fastened with bolts, nuts and washers to the flanges of the loading blocks and adapted to clamp the elements to be handled loaded in the column. In this figure it is also possible to see the operation of spring 14 moving the blade. When the loading block is in the retracted position inside the column, spring is in its released rest position 26; when pin 15 is rotated to bring the loading block in the loading position protruding from the column, spring is loaded into position 25, so that when the element to be handled is unloaded from the column, the spring will be released causing the loading block to return inside the column.

It has to be noted that the loading block and the relevant vibration damping pads have a specific configuration designed for meeting the configuration of the element to be handled, so that they may have different shapes according to the form of said element, without requiring however any modification of the here disclosed system. In addition the structural parts may have different dimensions and thickness to obtain different pitch, length or width from the dimensions illustrated in the drawings, according to use for which the staking column is being designed, without altering the technological and constructional concept of the components.

Although in the embodiment illustrated in the accompanying drawings, assembly of the components is being carried out by means of bolts, screws and similar fastening means, so that the components may be easily replaced in case of wear, other fastening means might be provided as well, such as welding and like systems.

## Claims

1. An automatic stacking column for storing and transporting elements to be assembled, comprising a base (21A), two standards (21), a cover (9) and a set of loading blocks (3,4) for the elements to be handled, said loading blocks (3,4) being connected to one another forming a chain of interlocked links (T1-Tn) of the column, each link of the column consisting of a loading block comprising members for supporting and clamping the elements to be handled, said block being rotatably fixed to the column standards by means of pins (15) rotating in side slots (1) acting on the block of the subsequent link and connecting seats (20) allowing to lower each block on the block of the preceding link, causing the element loaded on the preceding link to be clamped in the stored position, ***characterized in that*** the loading block (3) consists of a C-bent channel sheet with an upper flange (32) and a lower flange (33), said upper and lower flanges (32,33) being provided with vibration damping pads (31) supporting and clamping the elements loaded in the column, and a seat or blade (20) pivoted to the sides of the channel sheet (3) and the column standards (21), allowing the block to be moved between an unloaded position inside the column and a loading position protruding from the column.

2. The automatic stacking column of claim 1, wherein the block (4) for the first lowermost link (T1) of the column consists of an upset-L angle iron, provided with vibration damping pads (31) only on its horizontal side (44), to support the first lowermost element to be handled.

3. The automatic stacking column of claim 1, wherein above the uppermost link (Tn) of the column, a locking system (2) for all the loaded elements is provided, comprising a turning lever (22) having vibration damping pads (31) directed downwards, said lever (22) being able to be turned from an out-of-alignment rest position to an operative position axially aligned with the loaded blocks and lowered on the uppermost block, to clamp the corresponding uppermost loaded element to be handled, by actuation of a control key (C) of said locking system, said key operating automatically the system release when actuated in the opposite direction.

4. The automatic stacking column of the preceding claims, wherein the automatic rotation movement of the column links (Tn) is controlled by a spring (14) wound on said link rotating pins (15), said spring (14) being in the release condition (26) when the empty blocks are in a retracted position inside the column, and being loaded by the rotation of the pins to move the blocks in the loading position (25) protruding from the column, said spring (14) being released automatically with consequent return of the block (3) inside the column, when the corresponding element to be handled is unloaded from the column.

5. The automatic stacking column of the preceding claims, wherein the loading operations of the elements to be handled starting from the column bottom (T1) and the unloading operations of the elements starting from the column top (Tn), cause the column links to be either locked or released, respectively, in a sequential automatic order of the column links following the link of the starting loading or unloading operation, at each subsequent loading or unloading operation of the element to be handled of the relevant column link.

## Patentansprüche

1. Automatische Stapelsäule zum Lagern und Transportieren von zusammensetzbaren Elementen, enthaltend einen Sockel (21A), zwei Schultern (21), einen Deckel (9) und eine Anzahl Beladungsstücke (3,4) für die zusammensetzbaren Elementen, wobei die Beladungsstücke miteinander verbunden sind, und eine Kette von abhängigen Säulengliedern (T1 - Tn) und jedes Säulenglied aus einem Stück besteht, das die Einrichtungen für die Halterung und Klemmung der zusammensetzbaren Elementen aufweist und durch Zapfen (15) an die Säulenschultern mittels an das Stück des darauffolgenden Glieds wirkender Seitenschlitze (1) drehend befestigt wird, sowie Verbindungssitze die die Senkbewegung jedes Stücks auf jenes Stück des vorhergehenden Glieds derart erlauben, dass das auf dem vorhergehenden Glied beladene zusammensetzbare Element an der gelagerten Stellung festgeklemmt wird, **dadurch gekennzeichnet, dass** das Beladungsstück (3) aus einem C-Profilblech mit einem oberen Flansch (32) und einem unteren Flansch (33) besteht, wobei diese oberen und unteren Flansche (32, 33) mit die auf der Säule beladenen Elemente haltenden und klemmenden schwingungsdämpfenden Kissen (31) versehen sind, sowie das Stück auch aus einem an den Seiten des Profilblechs (3) bzw. den Säulenschultern (21) verbolzten Sitz bzw. Flügel (20) besteht, so dass das Stück zwischen einer unbeladenen Stellung innerhalb der Säule und einer aus der Säule vorstehenden Stellung bewegt werden kann.

2. Automatische Stapelsäule nach Anspruch 1, worin das Beladungsstück (4) für das letzte untere Säulenglied (T1) aus einem umgestürzt L-Profilblech besteht, das mit schwingungsdämpfenden Kissen (31) nur an seiner waagerechten Seite (44) versehen ist, um das letzte untere zusammensetzbare Element zu stützen.

3. Automatische Stapelsäule nach Anspruch 1, worin eine Klemmvorrichtung (2) aller gelagerten Elemente oberhalb des ersten obersten Säulenglieds (Tn) vorgesehen wird, wobei diese Klemmvorrichtung eine mit nach unten gewandten schwingungsdämpfenden Kissen (31) versehene Schwenkhebel (22) aufweist, und diese Schwenkhebel aus einer außerachsigen Ruhestellung an eine mit den gelagerten Säulengliedern axial ausgerichtete Betriebsstellung geschwenkt und auf das besagte erste oberste gelagerte Säulenglied gesenkt werden kann, um das entsprechende oberste zusammensetzbare Element festzuklemmen, indem ein geeigneter Betätigungsschlüssel (C) die Klemmvorrichtung antriebt bzw. automatische freigibt, wenn der Schlüssel in entgegengesetzter Richtung gesteuert wird.

4. Automatische Stapelsäule nach den vorhergehenden Ansprüchen, worin die automatische Rotationsbewegung der Säulenglieder (Tn) von einer auf den Zapfen (15) der Beladungsstücke aufgewickelten Feder (14) gesteuert wird, wobei diese Feder in Ruhestellung ist, als sich die unbeladenen Beladungsstücke in einer zurückgestellten Stellung innerhalb der Säule befinden, während die Feder durch die Drehung der Zapfen aufgezogen wird, um die Beladungsstücke in die aus der Säule vorstehenden Beladungsstelle (25) zu führen, und danach automatisch schnappt, um das Beladungsstück (3) innerhalb der Säule wiederum einzuziehen, als das entsprechende zusammensetzbare Element aus der Säule entladen wird.

5. Automatische Stapelsäule nach den vorhergehenden Ansprüchen, worin die aus dem Grund (T1) der Säule beginnenden Beladungsvorgänge der Elemente bzw. die aus dem Kopf (Tn) der Säule beginnenden Entladungsvorgänge, die Verriegelung bzw. Entriegelung der Säulenglieder bewirken, und zwar in der automatischem sequentiellen Folge der Glieder nach dem Glied des Beladungs- bzw. Entladungsanfangsvorgangs, an jedem darauffolgenden Beladungs-bzw. Entladungsvorgang für das zusammensetzbare Element des entsprechenden Säulenglieds.

## Revendications

1. Colonne d'empilement automatique pour stocker et transporter des éléments assemblables, comprenant une base (21A), deux butées (21), un couvercle (9) et un jeu de chevilles (3,4) pour charger les éléments à assembler, connectées entre eux en formant une chaîne à maillons interdépendants (T1 - Tn) de la colonne, chaque maillon de la colonne étant formé par une cheville ayant les organes pour le support et le blocage des éléments à assembler, la dite cheville étant fixée en rotation aux butées par pivots (15) rotatifs dans des fentes latéraux (1) fonctionnantes sur la cheville du maillon suivant, et sièges de liaison permettant de baisser chaque cheville sur la cheville du maillon précédent, avec le blocage conséquent dans la position stockée de l'élément à assembler chargé sur la cheville précédente, **caractérisée en ce que** la dite cheville (3) est formée par une tôle profilée pliée à C, avec une joue supérieure (32) et une joue inférieure (33), les dites joues supérieures et inférieures (32, 33) étant munies de tampons antivibratoires (31) pour le support et blocage des éléments chargés dans la colonne, et par un siège ou palette (20) pivotant sur les côtés de la tôle profilée (3) et les butées (21) de la colonne, en permettant le mouvement de la cheville entre une position déchargée à l'intérieur de la colonne et une position en saillie de la colonne.

2. Colonne d'empilement automatique selon la revendication 1, dont la cheville (4) pour le premier maillon en bas (T1) de la colonne est formée par une tôle profilée pliée en L retourné, munie de tampons antivibratoires (31) seulement dans le côté horizontal (44) pour le support du premier élément en bas à assembler.

3. Colonne d'empilement automatique selon la revendication 1, dont dessus le dernier maillon plus en haut (Tn) de la colonne il y a un système de verrouillage (2) pour tous les éléments chargés, comprenant un levier pivotant (22) muni de tampons antivibratoires (31) tournés en bas, le dit levier pouvant être amené d'une position de repos désaxé à une position axiale en service alignée avec les chevilles chargées et baissée sur la cheville plus en haut, pour le blocage de l'élément à assembler correspondant chargé plus en haut, par actionnement d'une clé de commande (C) du système de verrouillage, la dite clé causant automatiquement le déblocage par actionnement dans le sens inverse.

4. Colonne d'empilement automatique selon les revendications précédentes, dont le mouvement automatique de rotation des maillons (Tn) de la colonne est commandé par un ressort (14) enroulé sur les dits pivots (15) rotatifs des chevilles, le dit ressort (14) étant dans l'état de repos lorsque les chevilles vides sont en position rentrée à l'intérieur de la colonne, et étant chargé par la rotation des pivots pour amener les chevilles en position de charge (25) en saillie de la colonne, le dit ressort étant déclenché automatiquement causant par conséquent la rentrée de la cheville (3) dans la colonne, lorsque l'élément à assembler y rélatif est enlevé de la colonne.

5. Colonne d'empilement automatique selon les revendications précédentes, dont les opérations de charge des éléments à assembler à partir du bas (T1) de la colonne, et les opérations d'enlèvement des éléments à partir du haut (Tn) de la colonne, causent respectivement le blocage ou le déblocage des maillons de la colonne selon un ordre séquentiel automatique des maillons successifs auquel de l'opération initiale de charge ou d'enlèvement, à chaque opération successive de charge ou d'enlèvement de l'élément à assembler du maillon correspondant de la colonne.
